# EUROPÄISCHE PATENTSCHRIFT

(11) **EP 0 806 310 B1**
(45) Veröffentlichungstag und Bekanntmachung des Hinweises auf die Patenterteilung: **28.11.2001**
(21) Anmeldenummer: 97104006.8
(22) Anmeldetag: 11.03.1997
(51) Int. Cl.: B60G 3/20, B60G 11/27, B62D 7/18

(54) **Einzelradaufhängung für ein luftgefedertes, lenkbares Rad eines Omnibusses oder Lastkraftwagens**
Independent suspension for a steered air suspended wheel of a bus or lorry
Suspension indépendante pour une roue directrice à suspension pneumatique d'un autobus ou camion

(30) Priorität: 11.05.1996 DE 19619189
(43) Veröffentlichungstag der Anmeldung: 12.11.1997
(73) Patentinhaber: MAN Nutzfahrzeuge Aktiengesellschaft, 80976 München (DE)
(72) Erfinder: Gusinde, Heinz, Dipl.-Ing. (FH), 85258 Weichs (DE); Kravos, Leopold, 86152 Augsburg (DE); Junginger, Jörg, Dipl.-Ing. (FH), 80796 München (DE)

(56) Entgegenhaltungen:
- DE-A- 3 345 952
- DE-A- 3 718 137
- FR-A- 1 190 072
- FR-A- 1 232 152
- FR-A- 2 675 431
- JP-A- 61 021 802
- US-A- 4 313 619

## Beschreibung

Die Erfindung betrifft eine Einzelradaufhängung für ein luftgefedertes, lenkbares Rad eines Omnibusses oder Lastkraftwagen mit Merkmalen der im Oberbegriff des Anspruches 1 angegebenen Art. Eine solche Radaufhängung ist in FR 1 232 152 A offenbart.

Weiterhin geht aus der Einführungsschrift der Mercedes-Benz AG zu ihrem Omnibus des Typs O 404 für die Vorderachse eine Einzelradaufhängung hervor, bestehend aus einem oberen Dreieckslenker und einem unteren Dreieckslenker sowie aus einer über einen Hebel gelagerten Momentenstrebe, über welche Lenker der Achsschenkelträger mit dem Fahrgestellrahmen des Busses verbunden ist. Dabei ragen die beiden unteren Dreieckslenker der beiden Vorderräder ebenso wie die zugehörigen Momentenstreben weit bis nahe zur Fahrzeugmitte herein, was selbstredend einen relativ hoch darüber bauenden Fußboden bedeutet. Diese bekannte Einzelradaufhängung mag zwar ein komfortables Fahren des Busses gewährleisten, schränkt aber wegen ihrer sehr raumverzehrenden Bauweise den für andere Aggregate oder Fahrzeugteile noch verfügbaren bzw. nutzbaren Raum erheblich ein.

Desweiteren sei der Vollständigkeit wegen auch noch auf die JP 61 021 802, die EP 0 182 480 A2 und die EP 0 242 883 B1, dort die Version gemäß Fig. 14, verwiesen. Diese Dokumente offenbaren jeweils Einzelradaufhängungen für ungelenkte Räder von Kraftfahrzeugen. Für den Fachmann ist jedoch klar, daß eine Aufhängung für ein ungelenktes Rad praktisch nicht für ein lenkbares Rad verwendbar ist, weil bei letzterem zusätzlich ein Achsschenkelträger notwendig ist und außerdem das Gestänge und die Hebelage des Lenkmechanismus sowie dessen Bewegungsbereiche berücksichtigt werden müssen.

Es ist daher Aufgabe der Erfindung, eine Einzelradaufhängung für ein lenkbares, luftgefedertes Rad eines Omnibusses oder Lastkraftwagen zu schaffen, die auf extrem platzsparende Bauweise ausgelegt ist, trotzdem ein Höchstmaß an Fahrkomfort garantiert und einen sehr hohen Radeinschlagwinkel zuläßt.

Diese Aufgabe ist erfindungsgemäß durch eine Einzelradaufhängung gelöst, die sich durch eine Kombination von Merkmalen, wie im Kennzeichen des Anspruches 1 angegeben, kennzeichnet.

Vorteilhafte Ausgestaltungen und Weiterbildungen dieser Lösung sind in den Unteransprüchen gekennzeichnet.

Die erfindungsgemäße Einzelradaufhängung ist für jedes lenkbare Rad eines Omnibusses oder Lastkraftwagen anwendbar. Mit besonderem Vorteil läßt sich die erfindungsgemäße Einzelradaufhängung an der Vorderachse eines Reisebusses realisieren, denn dort kommen die Vorteile derselben in besonders starker Weise zur Geltung. In bzw. an einem solchen Reisebus schafft die erfindungsgemäße Einzelradaufhängung für die gelenkten Vorderräder bei sehr platzsparender Bauweise aufgrund spezieller elesto-kinematischer Auslegung der Lenkerlager ein Höchstmaß an Fahrkomfort und erfüllt auch Forderungen nach hoher Achstragfähigkeit und größtmöglichem Radeinschlagwinkel von zum Beispiel 56° für das kurveninnere Rad. Außerdem gewährleistet die erfindungsgemäße Einzelradaufhängung eine direkte, zielgenaue und leichtgängige Lenkung der Räder, ist vergleichsweise einfach und schnell montierbar sowie sehr servicefreundlich. In Verbindung mit einem Reisebus erlaubt die erfindungsgemäße Einzelradaufhängung außerdem eine vergleichsweise tiefliegende Fußbodenebene mit großer Mittelgangbreite zwischen den Radkästen. Die Servicefreundlichkeit der erfindungsgemäßen Einzelradaufhängung resultiert unter anderem daraus, daß zur Lagerung des unteren Dreieckslenkers wartungsfreie kuglige Molekularlager und zur Lagerung der oberen Querlenker und des Längslenkers wartungsfreie, besonders verdrehweiche zylindrische Molekularlager verwendet werden. Das obere Lenkersystem verhält sich in Zusammenwirkung mit dem unteren Dreieckslenker bei Federbewegungen eines Rades völlig neutral und verzwängungsfrei. Bauteiltoleranzen, zum Beispiel in den Längen der Lenker, sind praktisch bedeutungslos und machen somit auch die ansonsten bei herkömmlichen Lösungen oftmals notwendigen Ausgleichsmaßnahmen bei der Montage überflüssig. Die Verwendung von relativ kleinen, radial hochbelastbaren und präzisen Molekular-Zylinderlagern zur Anlenkung der oberen Querlenker und des Längslenkers wird ermöglicht durch den großen Wirkabstand zwischen unterem und oberem Querlenkersystem. Aufgrund einer gezielten elasto-kinematischen Auslegung der gesamten Radführung mit definierten Eigenlenk-Eigenschaften wird eine hohe Fahrstabilität und Fahrsicherheit erreicht.

Nachstehend ist die erfindungsgemäße Einzelradaufhängung anhand mehrerer in der Zeichnung dargestellter Ausführungsbeispiele noch näher erläutert. Dabei ist die, hier für einen Reisebus als Teil der Vorderachse konzipierte Einzelradaufhängung gemäß der ersten Ausführungsform gezeigt
- in Fig. 1 in perspektivischer Ansicht schräg von vorne her,
- in Fig. 2 in perspektivischer Ansicht schräg von hinten her,
- in Fig. 3 in Draufsicht,
- in Fig. 4 in Seitenansicht, und
- in Fig. 5 in Vorderansicht.

Die Fig. 6 bis 9 zeigen den zugehörigen Achsschenkelträger im Detail, nämlich

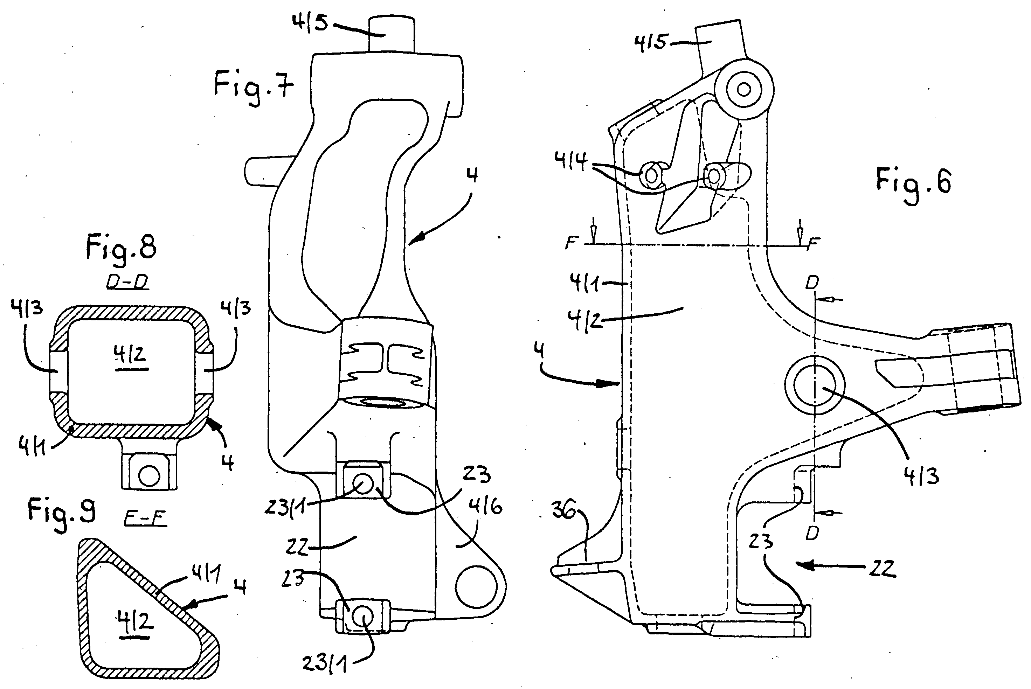

- Fig. 6: in Vorderansicht,
- Fig. 7: in Seitenansicht vom Rad her,
- Fig. 8: im Schnitt entlang Schnittlinie D-D aus Fig. 6, und

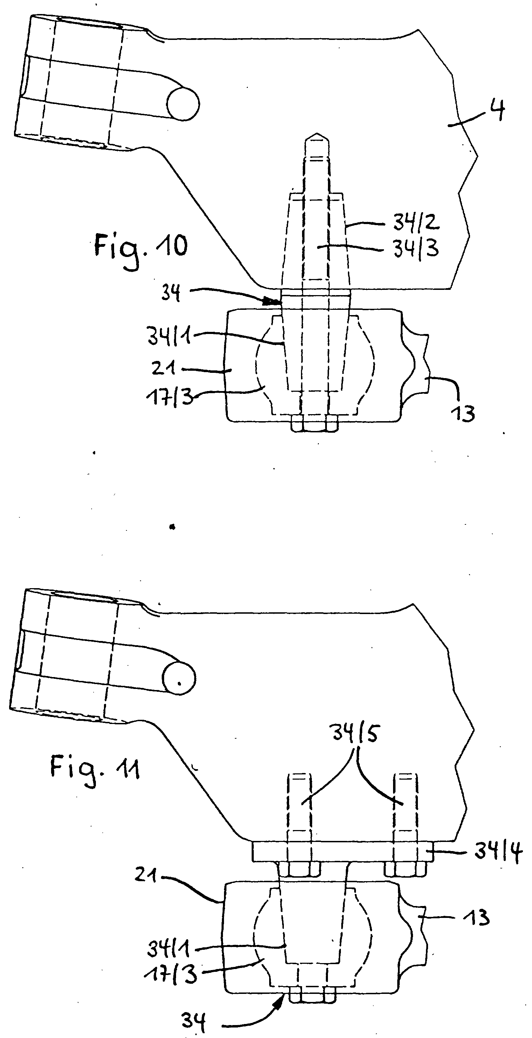

- Fig. 9: im Schnitt entlang Schnittlinie F-F aus Fig. 6.

Fig. 10 und 11 zeigen alternative Anlenkungslösungen für den Dreieckslenker am Achsschenkelträger.

In den Figuren sind der Übersichtlichkeit wegen gleiche bzw. einander entsprechende Teile mit gleichen Bezugszeichen angezogen.

In der Zeichnung ist als Teil der dargestellten Vorderachse mit 1 ein lenkbares, luftgefedertes Rad und mit 2 der dieses lagernde Radträger bezeichnet. Letzterer ist um einen Achsschenkelbolzen 3 schwenkbar an einem Achsschenkelträger 4 angelenkt. Dieser wiederum ist über mehrere Lenker an dem in der Zeichnung nur schematisch angedeuteten Fahrzeugrahmen 5 angelenkt. Vom Lenkmechanismus für die beiden Räder 1 der Achse sind in der Zeichnung ersichtlich ein Lenkgetriebe 6, das über einen Hebelarm 7, eine daran angeschlossene Lenkstange 8, einen an dieser angelenkten Kniehebel 9 und eine Spurstange 10 auf einen radträgerfest angeordneten Lenkhebel 11 wirkt. Eine mittlere Spurstange 12 verbindet den Kniehebel 9 mit der achsseitig gegenüberliegenden Radseite.

Die Einzelradaufhängung für ein Rad 1 kennzeichnet sich erfindungsgemäß durch die Kombination
- a): eines als verwindungssteifes Guß- oder Schmiedeteil ausgeführten Achsschenkelträgers 4 mit
- b): einer Radführung mit einem Dreieckslenker 13, zwei Querlenkern 14, 15 und einem Längslenker 16 in spezieller Anordnung, nämlich
- b1): der Dreieckslenker 13 ist
- b1.1): in einer unteren Horizontalebene angeordnet und
- b1.2): schenkelinnenseitig am Fahrzeugrahmen 5 sowie mit seinem Schenkelkniebereich am unteren Bereich des Achsschenkelträgers 4 angelenkt
- b1.2.1): über jeweils ein Gelenklager 17/1, 17/2, 17/3,
- b2): die beiden Querlenker 14, 15 sind
- b2.1): stabförmig und gleich ausgebildet,
- b2.2): in einer oberen Horizontalebene parallel oder leicht gepfeilt zueinander und quer zur Fahrzeuglängsachse angeordnet,
- b2.3): außenendig am oberen Bereich des Achsschenkelträgers 4, vorn bzw. hinten an diesem, und innenseitig am Fahrzeugrahmen 5 angelenkt
- b2.3.1): über jeweils ein verdrehweiches Lager 18,
- b3): der Längslenker 16 ist
- b3.1): in einer Horizontalebene sich nach vorne oder hinten erstreckend angeordnet, sowie
- b3.2): einenendes am Fahrzeugrahmen 5 und andernendes am oberen Bereich des Achsschenkelträgers 4 zu dessen Stabilisierung angelenkt
- b3.2.1): über jeweils ein verdrehweiches Lager 19/1, 19/2.

Nachstehend ist auf Einzelheiten dieser Einzelradaufhängung näher eingegangen.

Der Achsschenkelträger 4 ist zur Erzielung hoher Verwindungssteifigkeit als gegossener, in sich profilierter Hohlkörper beispielsweise aus Stahlguß oder Sphäroguß realisierbar. Einzelheiten und Details eines solchermaßen gegossenen Achsschenkelträger 4 sind aus den Figuren 6 bis 9 ersichtlich. Darin bezeichnen 4/1 die Außenwand und 4/2 den eingeschlossenen Hohlraum des Achsschenkelträgers 4. Mit 4/3 sind Guß-Kernaugen bezeichnet. Alternativ hierzu kann der Achsschenkelträger 4 aber auch als in sich querschnittsmäßig profiliertes Gesenkschmiedeteil, z. B. aus Vergütungsstahl realisiert sein. Unabhängig von der spanlosen Herstellungsart seiner Grundform wird die Endform des Achskörpers 4 durch entsprechende spanabhebende Nachbearbeitung des Rohlings an erforderliche Stellen erzeugt.

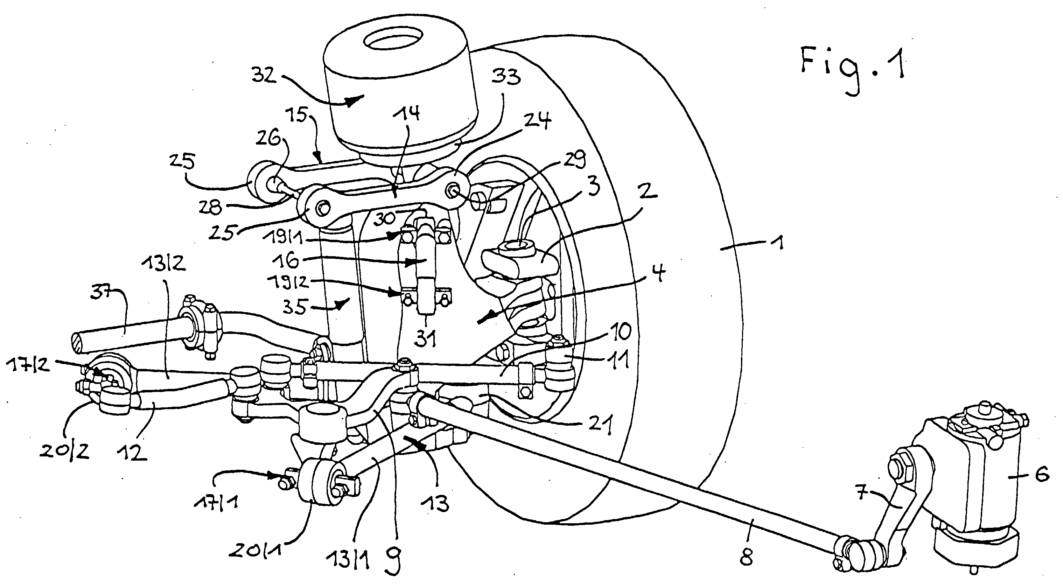

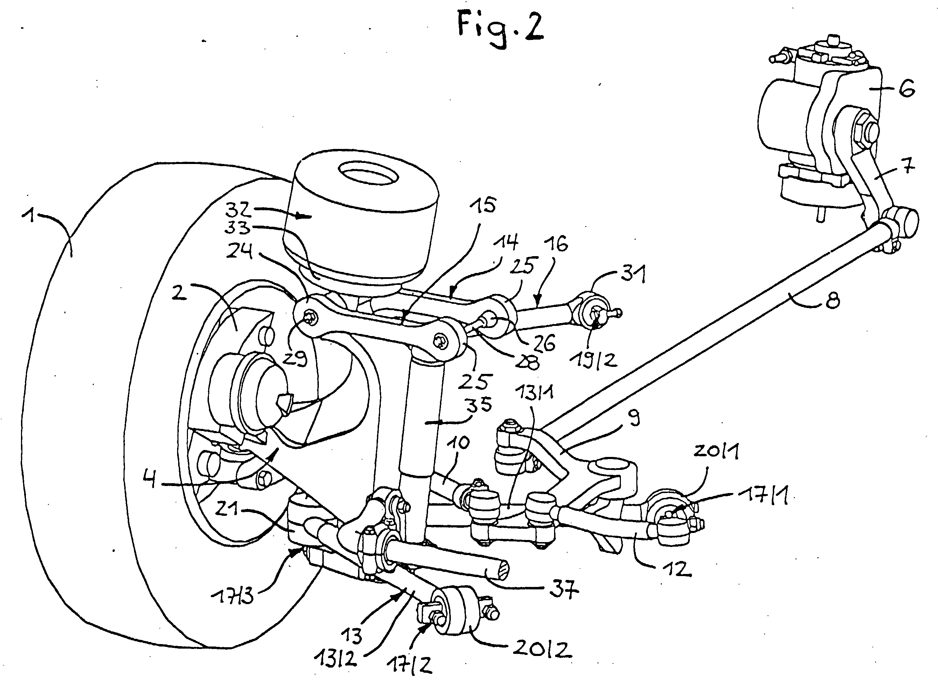

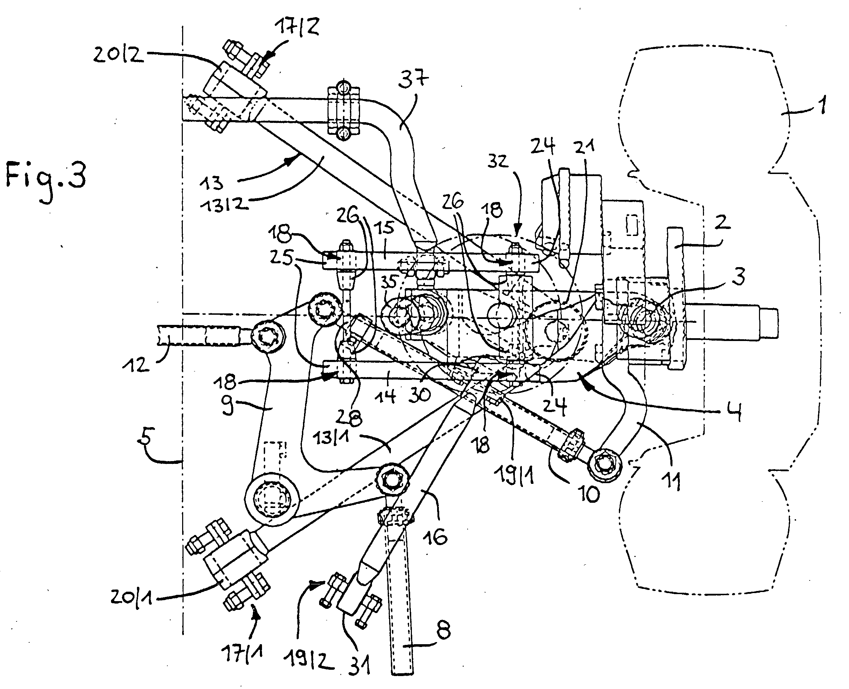

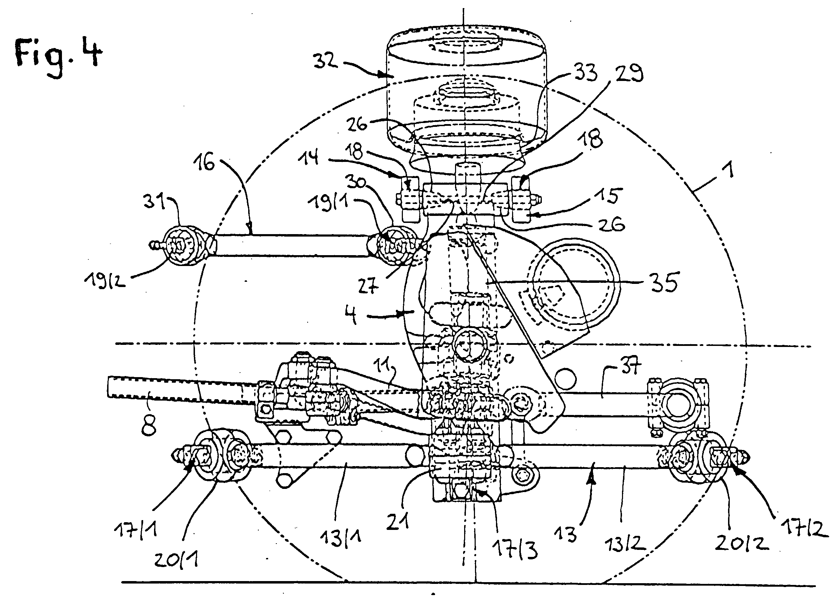

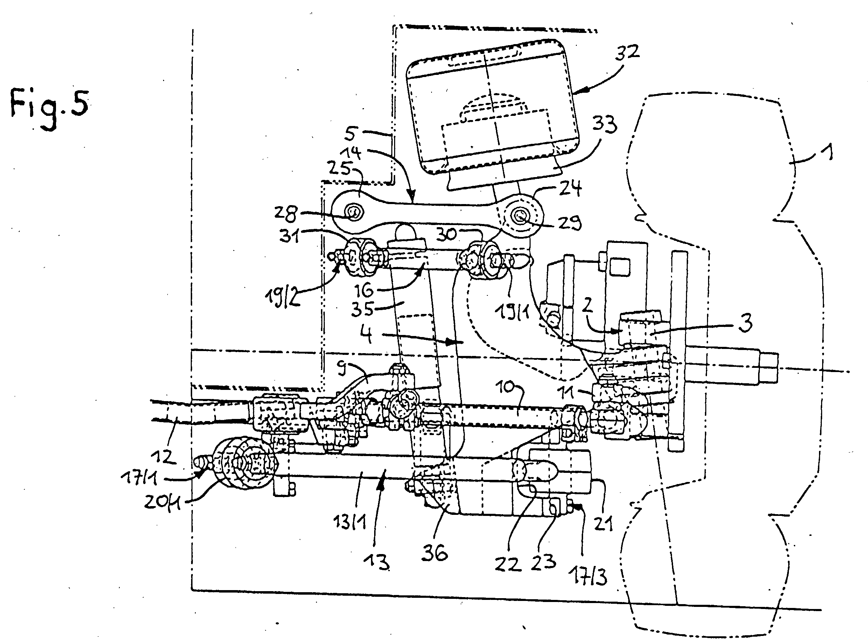

Bei dem in den Figuren 1 bis 9 gezeigten Ausführungsbeispiel übergreift der Dreieckslenker 13 mit seinen V-förmig gespreizten Schenkeln 13/1, 13/2 den dazwischen durchragenden Achsschenkelträger 4 und ist mit seinem Schenkel-Kniebereich an letzterem unten außen angelenkt.

Alternativ hierzu kann der Dreieckslenker 13 mit seinem Schenkel-Kniebereich - wie die Beispiele gemäß Fig. 10 und 11 zeigen - fliegend an einem am unteren Ende des Achsschenkelträgers 4 abragenden Lagerorgan 34 angelenkt sein. Hierauf ist weiter hinten noch näher eingegangen.

Der Dreieckslenker 13 ist schenkelinnenseitig wie auch im Kniebereich seiner Schenkel 13/1, 13/2 über jeweils ein kugliges Molekular-Gelenklager 17/1, 17/2, 17/3 am Fahrzeugrahmen 5 bzw. Achsschenkelträger 4 angelenkt. Im einzelnen weisen die beiden Schenkel 13/1, 13/2 des Dreieckslenkers 13 innenendig jeweils ein Lagerauge 20/1 bzw. 20/2 auf. In jedes derselben ist als Bestandteil eines sich in der Horizontalebene erstreckenden Molekular-Kugelpratzen-Gelenklagers 17/1 bzw. 17/2 ein wartungsfreies kugliges Molekularlager eingebaut. Über die äußeren Pratzen der beiden Gelenklager 17/1, 17/2 ist der Dreieckslenker 13 am Fahrzeugrahmen 5, dort entsprechenden Lagerböcken (nicht dargestellt) angelenkt. Im Kniebereich seiner beiden Schenkel 13/1, 13/2 weist der Dreieckslenker 13 ebenfalls ein Lagerauge 21 mit eingebautem wartungsfreien kugligem Molekularlager auf. Dieses ist im Fall des Ausführungsbeispieles gemäß Fig. 1 bis 9 Bestandteil eines sich vertikal erstreckenden Molekular-Kugelpratzen-Gelenklagers 17/3, über dessen äußere, vertikal angeordnete Pratzen der Dreieckslenker 13' außen am Achsschenkelträger 4 angelenkt ist. Hierzu weist letzterer in seinem unteren Bereich außen eine maulförmige Einbuchtung 22 auf, in die der Dreieckslenker 13 mit seinem Lagerauge 21 partiell eintaucht. Oberhalb und unterhalb der Einbuchtung 22 sind am Achsschenkelträger 4 Anlageflächen 23 für die Abstützung der Pratzen des Gelenklagers 17/3 und Gewindebohrungen 23/1 für die Festlegung derselben daran mittels Schrauben gegeben.

Im Fall der Beispiele gemäß Fig. 10 und 11 ist der Dreieckslenker 13 mit dem in seinem Lagerauge 21 eingebauten, wartungsfreien kugligen Molekularlager 17/3 über eine darin ausgebildete Konusbohrung auf einem kegligen Lagerzapfen 34/1 sitzend an diesem befestigt. Dieser ein Bestandteil des Lagerorgans 34 bildende keglige Lagerzapfen 34/1 ist am unteren Ende des Achsschenkelträgers 4 vertikal nach unten abragend befestigt. Im Fall der Ausführungsform gemäß Fig. 10 ist der Lagerzapfen 34/1 Bestandteil eines Doppelkegelbolzens, der mit seinem oberen kegligen Bolzenabschnnitt 34/2 in eine untenendig am Achsschenkelträger 4 ausgebildete Konusbohrung eintaucht und in dieser form- und kraftschlüssig mit einer Schraube 34/3 arretiert ist, die hier gleichzeitig auch zur Festlagerung des Lagers 17/3 am kegligen Lagerzapfen 34/1 dient. Im Fall der Ausführungsform gemäß Fig. 11 ist der keglige Lagerzapfen 34/1 Bestandteil einer Halteplatte 34/4, die mittels Schrauben 34/5 am unteren Ende des Achsschenkelträgers 4 befestigt ist. Das Lager 17/3 ist in diesem Fall mittels einer Schraube 34/6 am kegligen Lagerzapfen 34/1 festgespannt.

Jeder der beiden identischen Querlenker 14, 15 hat ein innenendiges Lagerauge 24 und ein außenendiges Lagerauge 25 mit jeweils einer quer zur Lenker-Längsrichtung verlaufenden Durchgangsbohrung, in die jeweils ein verdrehweiches, zylindrisches Molekular-Buchsenlager 18 mit seiner zylindrischen Schlitzbuchse eingebaut ist. An den einander zugewandten Stirnflächen der lenker-innenendigen Schlitzbuchsen, ebenso an den einander zugewandten Stirnflächen der lenker-außenendigen Schlitzbuchsen sind jeweils Kegelhülsen 26 abgestützt. Diese greifen in entsprechende konische Bohrungsabschnitte ein, die paarweise einander gegenüberliegend an den Enden zum einen einer Durchgangsbohrung in einem rahmenfesten Lagerbock (nicht dargestellt) und zum anderen einer Durchgangsbohrung 27 im oberen Bereich des Achsschenkelträgers 4 ausgebildet sind. Mit 28 ist ein Zuganker bezeichnet, der die beiden innenendigen Molekularlager-Schlitzbuchsen, die beiden daran abgestützten Kegelhülsen 26 und die die zugehörigen konischen Bohrungsabschnitte aufweisende Durchgangsbohrung am (nicht dargestellten) rahmenseitigen Lagerbock durchdringt und zur innenendigen Befestigung der beiden Querlenker 14, 15 am Fahrzeugrahmen 5 dient. Mit 29 ist ein zum Zuganker 28 parallel angeordneter Zuganker bezeichnet, der die beiden außenendigen Molekularlager-Schlitzbuchsen, die beiden daran abgestützten Kegelhülsen 26 und die die zugehörigen konischen Bohrungsabschnitte aufweisende Durchgangsbohrung 27 im Achsschenkelträger 4 durchdringt und zur außenendigen Befestigung der beiden Querlenker 14, 15 am Achsschenkelträger 4 dient. Dabei werden die beiden Lenker 14, 15 jeweils von außen her durch entsprechende axiale Vorspannung jedes der beiden Zuganker 28, 29 am Lagerbock bzw. Achsschenkelträger 4 festgespannt, wobei die Axialkraft über die beiden jeweils auf einem der Zuganker 28, 29 sitzenden Molekularlager-Schlitzbuchsen auf die solchermaßen mit hoher Friktionskraft in die konischen Bohrungsabschnitte gepreßten Kegelhülsen 26 übertragen wird.

Der zur Lagestabilisierung des Achsschenkelträgers 4 in Fahrzeuglängsrichtung dienende Längslenker 16 ist in einer Horizontalebene angeordnet, die sich parallel zu jener den Dreieckslenker 13 aufnehmenden erstreckt, jedoch nahe zu den oberen Querlenkern 14,15 hingerückt knapp unter (wie dargestellt) oder über diesen angeordnet ist. Der Längslenker 16 kann sich dabei in der Horizontalebene schräg oder parallel zur Fahrzeuglängsachse verlaufend vor oder hinter dem Achskörper 4, entweder auf Zug oder Druck beansprucht, erstrecken. Unabhängig davon weist der Längslenker 16 an jedem seiner beiden Enden ein Lagerauge 30 bzw. 31 mit jeweils einer quer zur Lenker-Längsrichtung verlaufenden Durchgangsbohrung auf, in die jeweils ein Molekular-Buchsenlager 19/1 bzw. 19/2 mit seiner zylindrischen Schlitzbuchse eingebaut ist. Über die Pratzen des einen Molekular-Buchsenlagers 19/1 ist die Verbindung des Längslenkers 16 zum oberen Bereich des Achsschenkelträgers 4 hergestellt, wobei an diesem entsprechende Anlageflächen 4/3 (siehe Fig. 6) für die Abstützung der Pratzen und Gewindebohrungen zur Festlegung der letzteren daran über Schrauben gegeben sind. Über die Pratzen mit zugehörigen Schrauben des anderen Molekular-Buchsenlagers 19/2 ist die Verbindung des Längslenkers 16 zu einem nicht dargestellten fahrzeugrahmenfesten Lagerbock hergestellt.

Vorzugsweise sind die Lenker 14, 15, 16 jeweils durch ein einteiliges Gesenkschmiedeteil realisiert, können aber auch als Gußteil dargestellt werden, wobei das Rohteil nach dem Ausformen an den notwendigen Stellen entsprechend spanabhebend nachbearbeitet ist.

Die vorbeschriebene Einzelradaufhängung ist ergänzt durch eine Feder-Dämpfer-Einrichtung je Rad 1. Dabei ist ein Luftfederbalg 32 mit seinem untenendigen Balgführungskopf 33 am oberen Ende 4/5 des entsprechend hochgezogenen Achsschenkelträgers 4 und mit seiner obenendigen Dichtplatte am Fahrzeugrahmen 5, dort einem (nicht dargestellten) Lagerbock, angeschlossen. Ein vertikal leicht schräg stehender Stoßdämpfer 35, der im Fall des Beispieles gemäß Fig. 1 bis 9 den Dreieckslenker 13 durchragt, ist obenendig am Fahrzeugrahmen, dort einem (nicht dargestellten) Lagerbock, sowie untenendig am unteren Bereich des Achsschenkelträgers 4 innenseitig an diesem angelenkt. Hierzu sind an letzterem etwa in Höhe der Einbuchtung 22 Mittel 36, beispielsweise ein Vorsprung oder Lageraugen, gegeben.

Je nach Fahrzeugtyp und -art, zum Beispiel bei einem Omnibus der Hochdecker- und insbesondere der Doppeldecker-Bauart, kann es zweckmäßig sein bzw. sich als erforderlich erweisen, einen Stabilisator 37 vorzusehen, der die Seitenneigung des Fahrzeuges in Kurven und dessen Seitenwindempfindlichkeit reduziert sowie das Wankverhalten verbessert. Ein solcher Stabilisator 37 kann in Draufsicht gesehen U-förmig ausgebildet sein, die beiden je Achse gegebenen Achsschenkelträger 4 gelenkig miteinander verbinden und über (nicht dargestellte) Schwingen bzw. Lagerböcke am Fahrzeugrahmen 5 aufgehängt sein. Die Anschlußstelle am Achsschenkelträger ist duch das dortige Organ 4/6 gegeben.

Nachstehend noch einige Betrachtungen zu vorteilhaften Eigenschaften einer Achse mit den erfindungsgemäßen Radaufhängungen.

Aufgrund der Anordnung der in parallelen Ebenen bei Fahrniveaulage liegt das Momentanzentrum der Achse in Fahrbahnebene, es fehlt mithin der bei manchen Radaufhängungen für die störende Seitenbeschleunigung verantwortliche Querkrafthebelarm. Aufbau-Seitenbeschleunigungen sind daher bei einem Fahrzeug mit der erfindungsgemäßen Einzelradaufhängung wirksam vermeidbar. Die gesamte Achsführung, insbesondere aber die Lagerstellen selbst, halten Fahrbahngeräusche vom Fahrzeugaufbau fern, sind wartungs- und praktisch verschleißfrei, kaum nachgiebig, dennoch leicht drehbar und präzise. Während der unten liegende Dreieckslenker 13, wegen seiner großen Projektionslänge und der relativ kleinen Verdrehwinkel, mit drei den auftretenden Belastungen angepaßten Molekular-Kugelpratzen-Gelenklagern ausgerüstet ist, werden für das aufgelöste obere Lenkersystem 14, 15, 16 zylindrische Molekular-Schlitzbuchsenlager verwendet. Weil Einzellenker grundsätzlich nur Kräfte in Lenker-Längsrichtung übertragen, sind diese Lenker 14, 15, 16 mit einfachen Querdurchgangsbohrungen für die jeweilige Lageraufnahme auch besonders kostengünstig herzustellen. Schließlich zeichnen sich zylindrische Molekular-Schlitzbuchsenlager durch hohe radiale Belastbarkeit, Radialsteifigkeit und Präzision sowie große zulässige Verdrehwinkel und damit hohe Verdrehweichheit aus. Alle diese Eigenschaften sind letztendlich auch entscheidend für ein gutes Ansprechverhalten des gesamten Federungssystems, was sich voll auf den Fahrkomfort auswirkt. Bei der Entwicklung der Einzelradaufhängung für die Achse wurde auch besonders auf die Achseinbindungs-Peripherie am Fahrzeugrahmen geachtet, dessen Struktursteifheit ein entscheidendes Kriterium für den Fahrkomfort darstellt.

## Patentansprüche

1. Einzelradaufhängung für ein luftgefedertes, lenkbares Rad (1) eines Omnibusses oder Lastkraftwagen, das auf einem Radträger (2) gelagert ist, der um einen Achsschenkelbolzen (3) schwenkbar an einem Achsschenkelträger (4) und dieser wiederum über mehrere Lenker geführt am Fahrzeugrahmen angelenkt ist, **gekennzeichnet durch** die Kombination
a) eines als verwindungssteifes Guß- oder Schmiedeteil ausgeführten Achsschenkelträgers (4) mit
b) einer Radführung mit einem Dreieckslenker (13), zwei Querlenkern (14, 15) und einem Längslenker (16) in spezieller Anordnung, nämlich
b1) der Dreieckslenker (13) ist
b1.1) in einer unteren Horizontalebene angeordnet und
b1.2) schenkelinnenseitig am Fahrzeugrahmen (5) sowie mit seinem Schenkel-Kniebereich am unteren Bereich des Achsschenkelträgers (4) angelenkt
b1.2.1) über jeweils ein Gelenklager (17/1, 17/2, 17/3),
b2) die beiden Querlenker (14, 15) sind
b2.1) stabförmig und gleich ausgebildet,
b2.2) in einer oberen Horizontalebene parallel oder leicht gepfeilt zueinander und quer zur Fahrzeuglängsachse angeordnet,
b2.3) außenendig am oberen Bereich des Achsschenkelträgers (4), vorn bzw. hinten an diesem, und innenseitig am Fahrzeugrahmen (5) angelenkt
b2.3.1) über jeweils ein verdrehweiches Lager (18),
b3) der Längslenker (16) ist
b3.1) in einer Horizontalebene sich nach vorne oder hinten erstreckend angeordnet, sowie
b3.2) einenendes am Fahrzeugrahmen (5) und anderenendes am oberen Bereich des Achsschenkelträgers (4) zu dessen Stabilisierung angelenkt
b3.2.1) über jeweils ein verdrehweiches Lager (19/1, 19/2).

2. Einzelradaufhängung nach Anspruch 1, **dadurch gekennzeichnet, daß** der Dreieckslenker (13) mit seinen V-förmig gespreizten Schenkeln (13/1, 13/2) den dazwischen durchragenden Achsschenkelträger (4) übergreift und an diesem unten außen mit seinem Schenkel-Kniebereich angelenkt ist.

3. Einzelradaufhängung nach Anspruch 1, **dadurch gekennzeichnet, daß** der Dreieckslenker (13) mit seinem Schenkel-Kniebereich fliegend an einem am unteren Ende des Achsschenkelträgers (4) abragenden Lagerorgan (34; 34/1) angelenkt ist.

4. Einzelradaufhängung nach einem der Ansprüche 1 bis 3, **dadurch gekennzeichnet, daß** der Dreieckslenker (13) schenkelinnenseitig wie auch im Kniebereich seiner beiden Schenkel (13/1, 13/2) über jeweils ein kugliges Molekular-Gelenklager (17/1, 17/2, 17/3) am Fahrzeugrahmen (5) bzw. Achsschenkelträgers (4) angelenkt ist.

5. Einzelradaufhängung nach einem der vorhergehenden Ansprüche, **dadurch gekennzeichnet, daß** die beiden Schenkel (13/1, 13/2) des Dreieckslenkers (13) innenendig jeweils ein Lagerauge (20/1, 20/2) aufweisen, in jedes derselben als Bestandteil eines sich in der Horizontalebene erstreckenden Molekular-Kugelpratzen-Gelenklagers (17/1, 17/2) ein wartungsfreies kugliges Molekuarlager eingebaut ist, und daß über die äußeren Pratzen der beiden Gelenklager (17/1, 17/2) mit zugehörigen Schrauben der Dreieckslenker (13) innenendig am Fahrzeugrahmen (5), dort einem entsprechenden Lagerbock, angelenkt ist.

6. Einzelradaufhängung nach einem der Ansprüche 1 und 2, **dadurch gekennzeichnet, daß** der Dreieckslenker (13) im Kniebereich seiner beiden Schenkel (13/1, 13/2) ein Lagerauge (21) aufweist, in das ein wartungsfreies kugliges Molekularlager eingebaut ist, das wiederum Bestandteil eines vertikal angeordneten Molekular-Kugelpratzen-Gelenklagers (17/3) ist, über dessen äußere, vertikale Pratzen der Dreieckslenker (13) außen am Achsschenkelträger (4) angelenkt ist.

7. Einzelradaufhängung nach Anspruch 6, **dadurch gekennzeichnet, daß** der Achsschenkelträger (4) in seinem unteren Bereich außen eine maulförmige Einbuchtung (22) aufweist, in die der Dreieckslenker (13) mit seinem im Schenkel-kniebereich gegebenen Lagerauge (21) partiell eintaucht, und daß oberhalb und unterhalb der Einbuchtung (22) am Achsschenkelträger (4) Anschlußflächen (23) mit Gewindebohrungen (23/1) für die Abstützung und Befestigung der Pratzen des Gelenklagers (17/3) gegeben sind.

8. Einzelradaufhängung nach Anspruch 3, **dadurch gekennzeichnet, daß** am unteren Ende des Achsschenkelträgers (4) ein vertikal nach unten abragender kegliger Lagerzapfen (34/1) befestigt ist, auf dem ein kugliges Molekularlager (17/3) mit einer entsprechenden Konusbohrung aufgesetzt und mittels einer Schraube (34/3) befestigt ist, welches Molekularlager (17/3) in das im Schenkel-Kniebereich des Dreieckslenkers (13) gegebene Lagerauge (21) eingebaut ist.

9. Einzelradaufhängung nach Anspruch 1, **gekennzeichnet**, daß jeder der beiden Querlenker (14, 15) ein innenendiges Lagerauge (24) und ein außenendiges Lagerauge (25) mit jeweils einer sich quer zur Lenker-Längsrichtung erstrekkenden Durchgangsbohrung aufweist, in die jeweils ein zylindrisches Molekular-Buchsenlager (18) mit einer zylindrischen Schlitzbuchse eingebaut ist, daß ferner an den einander zugewandten Stirnflächen der beiden lenker-innenendigen Schlitzbuchsen und der beiden lenker-außenendigen Schlitzbuchsen jeweils Kegelhülsen (26) abgestützt sind, welche in entsprechende konische Bohrungsabschnitte eingreifen, die paarweise einander gegenüberliegend an den Enden zum einen einer Durchgangsbohrung in einem rahmenfesten Lagerbock und zum anderen einer Durchgangsbohrung (27) im oberen Bereich des Achsschenkelträgers (4) ausgebildet sind, und daß die beiden Querlenker (14, 15) innenendig und außenendig über jeweils einen Zuganker (28, 29) am Lagerbock bzw. Achsschenkelträger (4) angelenkt sind, von denen jeder jeweils die beiden innenseitigen bzw. außenseitigen Schlitzbuchsen, die beiden lenker-innen- bzw. lenker-außenseitigen Kegelhülsen (26) und die die konischen Bohrungsabschnitte aufweisende Durchgangsbohrung im Lagerbock bzw. Achsschenkelträger (4) durchdringt, wobei durch entsprechende axiale Vorspannung jedes der beiden Zuganker die axiale Kraft von dem jeweiligen Schlitzbuchsenpaar auf das zugehörige Kegelhülsenpaar übertragen wird und letztere so mit hoher Friktionskraft in den konischen Bohrungsabschnitten festgespannt sind.

10. Einzelradaufhängung nach Anspruch 1, **dadurch gekennzeichnet, daß** der Längslenker (16) in einer Horizontalebene angeordnet ist, die sich parallel zu jener den Dreieckslenker (13) aufnehmenden erstreckt, jedoch nahe zu den oberen Querlenkern (14, 15) hingerückt, knapp unter oder über diesen angeordnet ist, und daß der Längslenker (16) sich in der Horizontalebene schräg oder parallel zur Fahrzeuglängsachse verlaufend erstreckt.

11. Einzelradaufhängung nach einem der Ansprüche 1 und 10, **dadurch gekennzeichnet, daß** der Längslenker (16) an jedem seiner beiden Enden ein Lagerauge (30, 31) aufweist, in dessen Querdurchgangsbohrung ein Molekular-Buchsenlager (19/1 bzw. 19/2) mit einer zylindrischen Schlitzbuchse eingebaut ist, wobei über die Pratzen des einen Molekular-Buchsenlagers (19/1) die Verbindung zum oberen Bereich des Achsschenkelträgers (4) und über die Pratzen des anderen Molekular-Buchsenlagers (19/2) die Verbindung zu einem fahrzeugrahmenfesten Lagerbock hergestellt ist.

12. Einzelradaufhängung nach Anspruch 1, **dadurch gekennzeichnet, daß** die beiden Querlenker (14, 15) und der Längslenker (16) jeweils durch ein einteiliges Gelenkschmiedeteil oder Gußteil gebildet sind, das nach dem Ausformen an den erforderlichen Stellen entsprechend spanabhebend nachbearbeitet ist.

13. Einzelradaufhängung nach Anspruch 1, **dadurch gekennzeichnet, daß** der Achsschenkelträger (4) als gegossenes, in sich profilierter Hohlkörper, beispielsweise aus Stahlguß oder Sphäroguß ausgeführt ist, an dem nach dem Ausformen an den erforderlichen Stellen entsprechend spanabhebende Nacharbeiten vorgenommen sind.

14. Einzelradaufhängung nach Anspruch 1, **dadurch gekennzeichnet, daß** der Achsschenkelträger (4) als in sich querschnittsmäßig profiliertes Schmiedeteil, beispielsweise aus Vergütungsstahl ausgebildet ist, an dem nach dem Ausformen an den erforderlichen Stellen entsprechend notwendige spanabhebende Nacharbeiten durchgeführt sind.

15. Einzelradaufhängung nach Anspruch 1, **gekennzeichnet durch** deren Kombination mit einer Feder-Dämpfer-Einrichtung je Rad (1), bei der ein Luftfederbalg (32) mit seinem untenendigen Balgführungstopf (33) am oberen Ende des Achsschenkelträgers (4) und obenendig mit einer Dichtplatte am Fahrzeugrahmen (5), dort an einem Lagerbock angeschlossen ist, und bei der ein Stoßdämpfer (35) den Dreieckslenker (13) zwischen dessen Schenkeln (13/1, 13/2) durchragt und obenendig am Fahrzeugrahmen (5) sowie untenendig am unteren Bereich des Achsschenkelträgers (4) innenseitig an diesem angelenkt ist.

16. Einzelradaufhängung nach den Ansprüchen 1 und 15, **gekennzeichnet durch** deren Kombination mit einem in Draufsicht gesehen U-förmigen Stabilisator, der die beiden je Achse gegebenen Achsschenkelträger (4) miteinander gelenkig verbindet und über Schwingen oder Lagerböcke am Fahrzeugrahmen (5) aufgehängt ist.

17. Einzelradaufhängung nach Anspruch 15, **gekennzeichnet**, daß an der Innenseite des Achsschenkelträgers (4), etwa in Höhe der Einbuchtung (22) Mittel (36), beispielsweise ein Vorsprung oder Lageraugen, für die untere Abstützung und Anlenkung des Stoßdämpfers (35) gegeben sind.

## Claims

1. Independent wheel suspension for an air-sprung, steerable wheel (1) fitted to a bus/coach or truck and borne by a wheel carrier (2) which can be slewed about a kingpin (3) and is located on a steering-knuckle carrier (4) which in turn is located on the vehicle frame via several control arms, **characterised by** the combination of
a) a steering-knuckle carrier (4) designed as a torsion-resistant cast or forged part with
b) a wheel control system with an A-arm (13), two transverse control arms (14, 15) and a longitudinal arm (16) in special arrangement, namely that
b1) the A-arm (13) is
b1.1) arranged in a lower horizontal plane and
b1.2) is located with the inside of its legs on the vehicle frame (5) and with its leg/knee area on the lower area of the steering-knuckle carrier (4)
b1.2.1) in each case via a pivoting bearing (17/1, 17/2, 17/3),
b2) the two transverse control arms (14, 15) are
b2.1) bar-shaped, of identical design and,
b2.2) in an upper horizontal plane, arranged parallel or slightly inclined towards each other and at right angles to the vehicle longitudinal axis and are,
b2.3) located with their outer ends on the upper area of the steering-knuckle carrier (4) at its front and rear ends and with their inner ends on the vehicle frame (5),
b2.3.1) in each case via a soft-turning bearing (18),
b3) the longitudinal arm (16)
b3,1) extends towards the front or rear in a horizontal plane and
b3.2) is located with its one end on the vehicle frame (5) and with its other end on the upper area of the steering-knuckle carrier (4) for the stabilisation of said carrier (4),
b3.2.1) in each case via a soft-turning bearing (19/1, 19/2).

2. Independent wheel suspension according to Claim 1, **characterised in that** the A-arm (13) with its legs (13/1, 13/2) opened in V-shape arrangement extends beyond the steering-knuckle carrier (4) projecting in between said opened legs (13/1, 13/2) and is located with its leg/knee area on the outer lower end of said carrier (4).

3. Independent wheel suspension according to Claim 1, **characterised in that** the A-arm (13) with its leg/knee area is floatingly located on a bearing organ (34; 34/1) projecting downwards at the lower end of the steering-knuckle carrier (4).

4. Independent wheel suspension according to one of the Claims 1 to 3, **characterised in that** on the inner side of its legs and in the knee area of its two legs (13/1, 13/2) the A-arm (13) is located on the vehicle frame (5) and steering-knuckle carrier (4) via a spherical molecular pivoting bearing (17/1, 17/2, 17/3).

5. Independent wheel suspension according to one of the foregoing Claims, **characterised in that** each of the two legs (13/1, 13/2) of the A-arm (13) has a bearing eye (20/1, 20/2) at its inner end, in each of which bearing eyes (20/1, 20/2) a maintenance-free spherical molecular bearing is installed as an integral part of a molecular ball-type claw pivoting bearing (17/1, 17/2) extending in the horizontal plane, and that the A-arm (13) is located with its inner end on a suitable bearing block on the vehicle frame (5) with the aid of associated bolts and via the outer claws of the two pivoting bearings (17/1, 17/2).

6. Independent wheel suspension according to one of the Claims 1 and 2, **characterised in that** in the knee area of its two legs (13/1, 13/2) the A-arm (13) is provided with a bearing eye (21) in which a maintenance-free spherical molecular bearing is installed which in turn is an integral part of a vertically arranged molecular ball-type claw pivoting bearing (17/3) via whose outer vertical claws the A-arm (13) is located on the steering-knuckle carrier (4).

7. Independent wheel suspension according to Claim 6, **characterised in that** in its lower outer area the steering-knuckle carrier (4) has a jaw-type recess (22) into which the A-arm (13) with its bearing eye (21) provided in the leg/knee area penetrates partially and that above and below said recess (22) on the steering-knuckle carrier (4) contact faces (23) with threaded bores (23/1) for the support and attachment of the claws of the pivoting bearing (17/3) are provided.

8. Independent wheel suspension according to Claim 3, **characterised in that** a tapered bearing journal (34/1) perpendicularly projecting downwards is fitted to the lower end of the steering-knuckle carrier (4), on which tapered bearing journal (34/1) a spherical molecular bearing (17/3) with a corresponding conical bore is seated and fastened by means of a bolt (34/3) and installed in the bearing eye (21) provided in the leg/knee area of the A-arm (13).

9. Independent wheel suspension according to Claim 1, **characterised in that** each of the two transverse control arms (14, 15) has a bearing eye (24) at the inner end and a bearing eye (25) at the outer end, each with a passage bore extending at right angles to the longitudinal direction of the arms, a cylindrical molecular bush bearing (18) with a cylindrical slot-type bush being installed in each passage bore, that in addition tapered sleeves (26) are supported on the mutually facing frontal faces of the two slot-type bushes at the inner ends of the arms and of the two slot-type bushes at the outer ends of the arms, which tapered sleeves (26) penetrate into corresponding the tapered bore sections which face one another in pairs and are located at the ends, on the one hand, of a passage bore in a bearing block firmly fitted to the frame and, on the other, of a passage bore (27) in the upper area of the steering-knuckle carrier (4) and that at their inner and outer ends the two transverse control arms (14, 15) are each located on the bearing block and the steering-knuckle carrier (4) via a tension bolt (28, 29), each of which transverse control arms penetrates the two slot-type bushes on the inner and outer sides, the two tapered sleeves (26) on the inner and outer sides of the arms and the passage bore in the bearing block and in the steering-knuckle carrier (4), which passage bore shows the conical bore sections, the axial force of the respective slot-type bush pair being transferred to the associated pair of tapered sleeves by means of the corresponding axial preload of each of the two tension bolts and, consequently, said associated pair of tapered sleeves being firmly clamped in the conical bore sections by means of high frictional force.

10. Independent wheel suspension according to Claim 1, **characterised in that** the longitudinal arm (16) is arranged in a horizontal plane extending parallel to the one in which the A-arm (13) is arranged but being located close to the upper transverse control arms (14, 15), slightly below or above said transverse control arms (14, 15) and that the longitudinal arm (16) extends in the horizontal plane obliquely or parallel to the vehicle longitudinal axis.

11. Independent wheel suspension according to one of the Claims 1 and 10, **characterised in that** at each of its two ends the longitudinal arm (16) is provided with a bearing eye (30, 31) in whose transverse passage bore a molecular bush bearing (19/1, 19/2) with a cylindrical slot-type bush is installed, the connection to the upper area of the steering-knuckle carrier (4) being established via the claws of the one molecular bush bearing (19/1) and the connection to a bearing block firmly fitted to the vehicle frame being established via the claws of the other molecular bush bearing (19/2).

12. Independent wheel suspension according to Claim 1, **characterised in that** the two transverse control arms (14, 15) and the longitudinal arm (16) are each a one-piece drop-forged or cast part which has been shaped and then suitably machined at the required points in a metal-removing process.

13. Independent wheel suspension according to Claim 1, **characterised in that** the steering-knuckle carrier (4) is designed as a cast, intrinsically shaped hollow body, made eg of cast steel or nodular graphite cast iron, which has been shaped and then suitably machined at the required points in a metal-removing process.

14. Independent wheel suspension according to Claim 1, **characterised in that** the steering-knuckle carrier (4) is designed as a forged part with shaped cross-section, made eg of tempered steel, which has been shaped and then suitably machined at the required points in a metal-removing process.

15. Independent wheel suspension according to Claim 1, **characterised by** its combination with one spring-damper device per wheel (1), in which device an air bellows (32) with its bellows guide cup (33) at its lower end is connected to the upper end of the steering-knuckle carrier (4) and at its upper end is connected with a sealing plate to a bearing block on the vehicle frame (5) and in which a shock absorber (35) extends through the transverse control arm (13) between its legs (13/1, 13/2) and is located with its upper end on the vehicle frame (5) and with its lower end on the inside of the lower area of the steering-knuckle carrier (4).

16. Independent wheel suspension according to Claims 1 and 15, **characterised by** its combination with a stabiliser which when viewed from above is U-shaped, connects the two steering-knuckle carriers (4) per axle with each other in an articulated manner and is fastened to the vehicle frame (5) via rockers or bearing blocks.

17. Independent wheel suspension according to Claim 15, **characterised in that** approximately at the height of the recess (22) the interior side of the steering-knuckle carrier (4) is provided with means (36), eg a projecting part or bearing eyes, for the lower support and location of the shock absorber (35).

## Revendications

1. Suspension de roue indépendante pour une roue directrice à suspension pneumatique (1), d'un autocar ou d'un camion, montée sur une fusée de roue (2) pivotant autour d'un axe de pivot (3) sur un support d'essieu (4) et ce dernier est articulé par plusieurs bras guidés au châssis du véhicule,
**caractérisée par** la combinaison suivante :
a) un support d'essieu (4), rigide en torsion, réalisé comme pièce de fonte ou comme pièce forgée, ayant
b) un guide de roue formé d'un bras triangulaire (13), de deux bras transversaux (14, 15) et d'un bras longitudinal (16) selon une disposition particulière à savoir :
b1) le bras triangulaire (13) est
b1.1) placé dans un plan horizontal inférieur et
b1.2) relié du côté du bras au châssis (5) du véhicule et au niveau de sa zone de genouillère de bras, à l'extrémité inférieure du support d'essieu (4), par une liaison articulée, b1.2.1) par chaque fois un palier opposé (17/1, 17/2, 17/3),
b2) les deux bras transversaux (14, 15) sont
b2.1) identiques et en forme de tiges,
b2.2) dans un plan horizontal supérieur, ils sont parallèles ou légèrement en biais l'un vers l'autre et disposés transversalement par rapport à l'axe longitudinal du véhicule,
b2.3) sont articulés du côté extérieur à l'extrémité extérieure, à la zone supérieure du support d'essieu (4), devant ou derrière celui-ci et du côté intérieur du châssis (5) du véhicule,
b2.3.1) par chaque fois un palier (18) souple en torsion,
b3) le bras longitudinal (16) est
b3.1) installé dans un plan horizontal s'étendant de l'avant vers l'arrière et
b3.2) par une extrémité, il est articulé au châssis (5) et par l'autre extrémité, il est articulé à la zone supérieure du support d'essieu (4) pour le stabiliser,
b3.2.1) par chaque fois un palier souple en torsion (19/1, 19/2).

2. Suspension de roue indépendante selon la revendication 1,
**caractérisée en ce que**
le bras triangulaire (13) avec ses branches (13/1, 13/2) écartées en forme de V, viennent par-dessus le support d'essieu (4) qui passe dans l'intervalle et le bras est articulé à ce support, en bas et à l'extérieur par sa zone de genouillère de branche.

3. Suspension de roue indépendante selon la revendication 1,
**caractérisée en ce que**
le bras triangulaire (13) est articulé avec sa zone de genouillère de branche de manière flottante à un organe de palier (34 ; 34/1), venant en saillie de l'extrémité inférieure du support d'essieu (4).

4. Suspension de roue indépendante selon l'une quelconque des revendications 1 à 4,
**caractérisée en ce que**
le bras triangulaire (13) est articulé du côté intérieur du bras ainsi que dans la zone de genouillère de ses deux branches (13/1, 13/2), par chaque fois un palier antagoniste moléculaire sphérique (17/1, 17/2, 17/3) sur le châssis (5) du véhicule ou son support d'essieu (4).

5. Suspension de roue indépendante l'une quelconque des revendications précédentes,
**caractérisée en ce que**
les deux branches (13/1, 13/2) du bras triangulaire (13) ont du côté intérieur chaque fois un oeillet de palier (20/1, 20/2) dans lequel est installé comme pièce constitutive, un palier opposé à pattes, sphérique, moléculaire (17/1, 17/2) s'étendant dans le plan horizontal et faisant partie d'un palier moléculaire sphérique sans entretien et,
par les pattes extérieures des deux paliers opposés (17/1, 17/2), il est relié avec des vis correspondantes pour le bras triangulaire (13), du côté intérieur sur le châssis (5) par un bloc de palier correspondant.

6. Suspension de roue indépendante selon l'une des revendications 1 et 2,
**caractérisée en ce que**
le bras triangulaire (13) comporte un oeillet de palier (21) dans sa zone de genouillère de ses deux branches (13/1, 13/2), cet oeillet reçoit un palier moléculaire sphérique sans entretien faisant lui-même partie d'un palier opposé, à griffes, sphérique moléculaire (17/3) installé verticalement et dont la patte verticale extérieure du bras triangulaire (13) est articulée extérieurement au support d'essieu (4).

7. Suspension de roue indépendante selon la revendication 6,
**caractérisée en ce que**
le support d'essieu (4) comporte dans sa zone inférieure, extérieurement, une cavité en forme de mors (22) dans laquelle pénètre partiellement le bras triangulaire (13) avec son oeillet de palier (21) prévu dans la zone de genouillère de branche, et **en ce qu'**au-dessus et en dessous de la cavité (22), sur le support d'essieu (4), il y a des surfaces de raccordement (23) avec des taraudages (23/1) pour supporter et fixer les pattes du palier opposé (17/3).

8. Suspension de roue indépendante selon la revendication 3,
**caractérisée en ce qu'**
à l'extrémité inférieure du support d'essieu (4), est fixé un tourillon de palier (34/1) conique, s'écartant verticalement vers le bas, et sur lequel est installé un palier moléculaire sphérique (17/3) avec un perçage conique correspondant et il est fixé par une vis (34/3), ce palier moléculaire (10/3) étant monté dans l'oeillet de palier (21) prévu dans la zone de genouillère de branche du bras triangulaire (13).

9. Suspension de roue indépendante selon la revendication 1,
**caractérisée en ce que**
chacun des bras transversaux (14, 15) comporte un oeillet de palier (24) à l'extrémité intérieure et un oeillet de palier (25) à l'extrémité extérieure avec chaque fois un perçage traversant s'étendant transversalement à la direction longitudinale du bras, et dans lequel est monté chaque fois un coussinet moléculaire cylindrique (18) avec une douille fendue cylindrique et **en ce qu'**en outre les surfaces frontales tournées l'une vers l'autre des deux douilles fendues à l'extrémité intérieure des bras et les deux douilles fendues à l'extrémité extérieure des bras supportent chaque fois des douilles coniques (26) pénétrant dans des segments de perçage coniques correspondants, qui s'opposent par paire aux extrémités d'une part un perçage traversant dans un bloc-palier solidaire du châssis et d'autre part un perçage traversant (27) dans la zone supérieure du support d'essieu (4) et,
les deux bras transversaux (14, 15) sont articulés à l'extrémité intérieure et à l'extrémité extérieure, chaque fois par l'intermédiaire d'un tirant (28, 29) sur le bloc-palier ou sur le support d'essieu (4) et chacun de ceux-ci traverse les deux douilles fendues du côté intérieur ou du côté extérieur, les deux douilles coniques (26) du côté extérieur du bras et du côté intérieur du bras et le perçage traversant à segment de perçage conique dans le bloc-palier et dans le support d'essieu (4), et par une précontrainte axiale correspondante de chacun des deux tirants, on transmet la force axiale de chacune des paires de douilles fendues à la paire de douilles coniques correspondante et celle-ci est ainsi précontrainte avec une force de friction élevée dans les segments de perçage coniques.

10. Suspension de roue indépendante selon la revendication 1,
**caractérisée en ce que**
le bras longitudinal (16) est installé dans un plan horizontal parallèle à chacun des bras triangulaires (13) toutefois à proximité des bras transversaux supérieurs (14, 15), juste en dessous ou au-dessus de ceux-ci et le bras longitudinal (16) s'étend en biais dans le plan horizontal ou parallèlement à l'axe longitudinal du véhicule.

11. Suspension de roue indépendante selon l'une des revendications 1 et 10,
**caractérisée en ce que**
le bras longitudinal (16) comporte à ses deux extrémités, un oeillet de palier (30, 31) dont le perçage transversal traversant reçoit un coussinet de palier moléculaire (19/1, 19/2) avec une douille fendue cylindrique et les pattes de l'un des coussinets moléculaires (19/1) réalisent la liaison avec la zone supérieure du support d'essieu (4) et par les pattes de l'autre coussinet moléculaire (19/2), il réalise la liaison avec un bloc-palier solidaire du châssis.

12. Suspension de roue indépendante selon la revendication 1,
**caractérisée en ce que**
les deux bras transversaux (14, 15) et le bras longitudinal (16) sont réalisés sous la forme d'une pièce d'articulation, forgée ou d'une pièce de fonte, en une seule partie, et qui après le démoulage subit un usinage avec enlèvement de copeaux aux endroits nécessaires.

13. Suspension de roue indépendante selon la revendication 1,
**caractérisée en ce que**
le support d'essieu (4) est un corps creux profilé en soi, coulé, par exemple en fonte d'acier ou en fonte sphérique, et qui, après le démoulage subit des usinages de finition par enlèvement de copeaux aux endroits nécessaires.

14. Suspension de roue indépendante selon la revendication 1,
**caractérisée en ce que**
le support d'essieu (4) est une pièce forgée, à section profilée, par exemple en acier traité, et qui après démoulage subit un usinage de finition avec enlèvement de copeaux aux endroits nécessaires.

15. Suspension de roue indépendante selon la revendication 1,
**caractérisée par**
sa combinaison à une installation à ressort et amortisseur pour chaque roue (1) dans laquelle un soufflet pneumatique (32) est installé par sa tête de guidage de soufflet (33) prévue à son extrémité inférieure, à l'extrémité supérieure du support d'essieu (4) et par son extrémité supérieure à une plaque d'étanchéité sur le châssis (5) du véhicule, relié à un bloc-palier et un amortisseur (35) traverse le bras triangulaire (13) entre ses branches (13/1, 13/2) et à l'extrémité supérieure, il est articulé au châssis du véhicule (5) et à son extrémité inférieure à la zone inférieure du support d'essieu (4), du côté intérieur de celui-ci.

16. Suspension de roue indépendante selon les revendications 1 et 15,
**caractérisée par**
leur combinaison avec un stabilisateur qui en vue de dessus a une forme en U et relie de manière articulée les deux supports d'essieu (4) prévus à chaque essieu, et les suspend au châssis (5) du véhicule par des bielles ou des blocs-paliers.

17. Suspension de roue indépendante selon la revendication 15,
**caractérisée en ce que**
sur le côté intérieur du support d'essieu (4), sensiblement à la hauteur de la cavité (22), des moyens (36) sont prévus par exemple sous la forme d'une partie en saillie ou d'un oeillet de palier pour un appui inférieur et l'articulation de l'amortisseur (35).
